# EUROPEAN PATENT SPECIFICATION

(11) **EP 2 792 047 B1**
(45) Date of publication and mention of the grant of the patent: **06.01.2021**
(21) Application number: 12857867.1
(22) Date of filing: 22.11.2012
(51) Int. Cl.: H02J 7/14, H02J 1/06

(54) **METHOD AND SYSTEM FOR BATTERY CHARGING OF A VEHICLE**
VERFAHREN UND SYSTEM ZUM LADEN EINER BATTERIE EINES FAHRZEUGES
PROCÉDÉ ET SYSTÈME DE CHARGE DE BATTERIE D'UN VÉHICULE

(30) Priority: 14.12.2011 SE 1151194
(43) Date of publication of application: 22.10.2014
(73) Proprietor: Scania CV AB, 151 87 Södertälje (SE)
(72) Inventor: LUNDGREN, Martin, 645 34 Strängnäs (SE); LEDFELT, Gunnar, 155 91 Nykvarn (SE)
(74) Representative: Scania CV AB
(86) International application number: PCT/SE2012/051286
(87) International publication number: WO 2013/089612

(56) References cited:
- EP-A1- 1 102 381
- EP-A1- 1 467 464
- EP-A2- 0 753 925
- WO-A1-2009/083747
- WO-A1-2010/144023
- DE-A1- 19 517 742
- US-A- 5 397 991
- US-A1- 2005 151 508
- US-A1- 2011 260 544

## Description

### Field of the invention

The present invention relates to a method and a system for battery charging of a vehicle according to the preambles of the independent claims.

### Background to the invention

A motor vehicle powered by a combustion engine is usually provided with an electric starter motor for starting the engine. This motor is usually powered by a chargeable starting battery which may with advantage be a so-called SLI (starting, lighting, ignition) battery which energises the starter motor, headlamps and the vehicle's ignition system. The driver regulates the running of the starter motor by activating the vehicle's ignition lock, e.g. by turning the ignition key.

In today's vehicles there are many applications which are supplied with energy via the vehicle's generator and starting battery. When the vehicle's engine is switched off and the generator therefore cannot deliver energy, these applications are energised from the SLI battery. If the engine is switched off and the energy in this starting battery is used for different applications, there is risk that so much of the energy in the battery may be consumed that the remaining energy is not sufficient to start the engine.

A conventional technique for solving the problem of insufficient energy in the SLI battery to start the vehicle's engine is to use two battery sets, so-called dual batteries, which is a usual solution in, for example, watercraft but is also appropriate for use in heavy vehicles, e.g. trucks. Such a dual battery system comprises a battery set primarily used for supplying current to the starter motor and the systems which are necessary for starting the engine, i.e. a starting battery set, and a service battery set used to energise different applications, e.g. lighting and heating/cooling the cab, which may need to be used when the engine is switched off. The service battery set is therefore used with advantage when someone is in the vehicle, even when the engine is switched off.

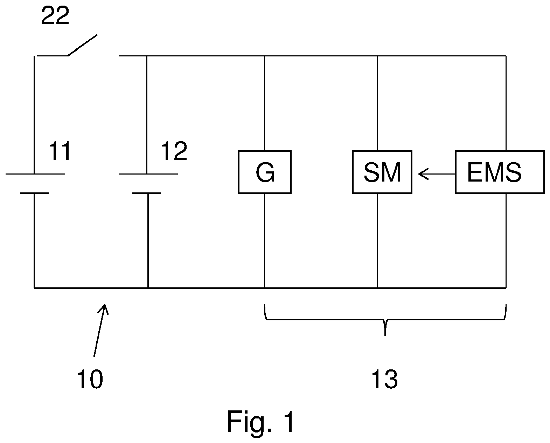

Figure 1 depicts an example of such a dual battery system 10 comprising a starting battery set 11 and a service battery set 12 which are connected in parallel to an electrical system 13 which comprises a starter motor SM, a generator G and an EMS (engine management system) unit which controls the starter motor. The electrical system also comprises other electric equipment used when the engine is not switched on, e.g. lighting, heating the cab. The service battery set 12 and the starting battery set 11 are also mutually connected in parallel, and a breaker 22 between them is used to make it possible to connect the starting batteries when starting the vehicle's engine.

Chargeable batteries have different characteristics depending on their type, i.e. the chemical composition of the material they are made of, the aggregation state of their material etc. There are for example batteries which contain lead, nickel-cadmium (Ni-Cd), lithium ion (Li ion) etc. Their nominal voltage varies depending on their type. Battery types for the various battery sets are chosen on the basis of desirable characteristics. The batteries must be able to deliver a high power for a relatively short period of time, i.e. for as long as the starter motor needs to run. In contrast, the service battery set requires good cyclic characteristics, i.e. the ability to be charged more deeply than the starting battery set, e.g. to cater for overnight sleeping in the vehicle.

In these dual battery systems, e.g. as in Figure 1, the charging process needs to be optimised. One way of achieving this is to proceed on the basis of a single-battery system, which means optimising the process by only catering for the one battery set. Such optimisation may for example take into account the temperature at which the starting batteries are estimated to be.

For optimum charging of a battery in a vehicle, an intended voltage has to be applied for a certain time. If the battery is undercharged, i.e. if a lower voltage is used and/or the charging takes place for a shorter time, the battery will recurringly sulphatise. In contrast, if the battery is regularly overcharged, i.e. if a higher voltage than intended is used and/or charging takes place for a longer time than intended, this may lead to corrosion of its lead plates and raised water consumption. Thus both overcharging and undercharging will shorten the battery's service life.

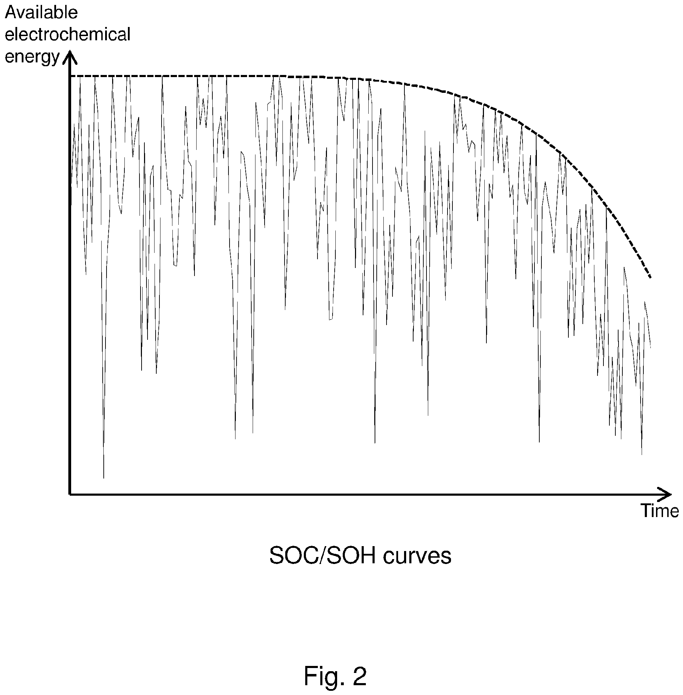

The two central concepts which determine the status of batteries, viz. "state of charge" (SOC) and "state of health" (SOH), are depicted schematically as two different curves in Figure 2. State of charge means how large a proportion of the battery's electrochemical energy is available relative to that which it has when fully charged. A new battery has more capacity when fully charged than a battery which has been used for a certain time. State of health means the battery's condition relative to when it was new and therefore serves as a measure of how worn out the battery is.

SOH is affected inter alia by the number of charging cycles the battery has undergone, how it has been charged and in what environmental conditions it has been used. Batteries not charged in an optimum way will wear more quickly. This affects the SOH curve by giving it a steeper slope.

The aforesaid dual battery system which optimises the charging process by catering for only the one battery set is a known charging system. There are also other types of charging system involving a plurality of batteries. Some of them are cited below.

Specification WO 2008/127520 A1 refers to a charging system for a plurality of batteries which involves setting up battery groups. Each battery group requires a regulator to apply voltage to it.

Specification US 2005/0093508 A1 refers to an automatic energy supply system in a vehicle with two battery groups which are connected and disconnected by means of a so-called dual breaker, which means that the two groups cannot be charged at the same time.

Specification GB 2438656 A refers to a control unit for a vehicle, e.g. a mobile home, boat or the like, which controls the connection of the one or more batteries which are to be charged, so that the generator is not overloaded. This control unit cannot vary the voltage.

Specification WO 2009/103091 A2 is concerned with the discharge of batteries. A battery system is divided into two subsystems, one of which may be disconnected if it has become discharged, while the other may continue to be used.

Specification WO 2005/060066 A1 is concerned with cell balancing in a plurality of batteries connected in series.

None of the techniques in the specifications cited above are suitable for use in optimised charging of both a starting battery set and a service battery set which are covered by a joint charging system.

As charging the battery sets currently involves for example catering for the temperature of the starting battery set and its charging process, but not catering for the two battery sets, the object of the present invention is to propose an improved and simplified method for the charging process which caters for both of the vehicle's battery sets. It is desired to be able to cater for the state of charge (SOC) of both battery sets. Being able to use as large a proportion as possible of the capacity of the batteries results in short-term advantages in that they will recover well after discharge. It is also desired to be able to cater for the state of health (SOH) of both battery sets. It is desirable to achieve as flat an SOH curve as possible, leading to long-term advantages.

Specification WO 2009/083747 A1 is concerned with an electrical system for an engine vehicle, the electrical system comprising: - a starting circuit with a starting battery set, - a service circuit with a service battery set and an electric generator; - a charging/separating module which interconnects the service circuit and the starting circuit, - an electronic control unit which controls the charging/separating module and the electric generator so as to set the charging voltage of the starting battery set and the output voltage of the generator according to the temperature and the state of charge of the starting battery set and to the temperature and the state of charge of the service battery set.

Specification WO 2010/144023 A1 is concerned with a method and arrangement for determining a resulting charging duration to be used for charging at least one starter battery in a dual battery system. The dual battery system comprises at least one power battery being connected to an electrical system comprising a starter motor and battery charging means, and the at least one starter battery, being connectable in parallel with the at least one power battery. According to the invention, an initial charging duration is determined based on a temperature of the at least one starter battery and on a measure of a behaviour of a starter motor, when the starter motor is activated. Further, the resulting charging duration to be used for charging the at least one starter battery is determined, during charging of the at least one starter battery, based on the initial charging duration and on a relation between a nominal charging voltage and an actual charging voltage being used for charging the at least one starter battery. By the present invention, the resulting charging duration to be used can be determined very exactly by adapting it to the actual parameters having an influence on the quality and efficiency for charging of the starter batteries.

Specification US 5,397,991 A is concerned with a multi-battery charging system for reduced fuel consumption and emissions for an automotive vehicle. The system starts the vehicle with a start battery in a fuel saving manner, removing electrical torque from the alternator shaft, and allows a second (run) battery to provide all or some of the current required by the vehicle loads as a fuel savings measure. The start battery is recharged after start and switched out of the system fully charged for future vehicle starts. The run battery is recharged when its charge level drops below a predetermined level with an on board battery charging device powered from a 115 volt or 220 volt ac power line source external to the vehicle. The system also increases the alternator field current to charge the run battery during vehicle deceleration to use vehicle momentum to torque the alternator shaft, thus saving fuel. The system controls the alternator field current with a voltage regulator. The voltage regulator senses the charge level of the run and start batteries and vehicle operating conditions and provides the proper current into the alternator rotor for maximum fuel savings.

Specification US 2005/151508 A1 is concerned with a battery isolator for an electrical system that includes at least a first battery and a second battery, wherein a negative terminal of each of the first and second batteries are connected together at a ground point and a charge source is connected in parallel with one of the first and second batteries. The battery isolator comprises an inductor having a first terminal and a second terminal, a first switch connected between a positive terminal of the first battery and the first terminal of the inductor, and a second switch connected between a second terminal of the inductor and a positive terminal of the second battery. The first and second switches are selectively actuated in a predetermined manner, such that the battery isolator can be used to charge one of the first battery and the second battery. At least one of the first and second switches may be selectively actuated to prevent one of the first and second batteries from substantially discharging the other battery when a charge source is not present.

### Summary of the invention

According to the disclosure, there are provided a method and a charging system according to the independent claims.
Preferred embodiments are defined by the dependent claims.

The object of the present invention is therefore to better optimise the charging process for the battery sets, including catering for the service battery set. It is also desirable to cater for the possibility of the two battery sets being charged/discharged to different extents.

### Brief description of drawings

- Figure 1: is a circuit diagram comprising two battery sets, a so-called dual battery system,
- Figure 2: schematically depicts SOC and SOH curves for a battery,
- Figure 3: is a circuit diagram of a preferred embodiment of a charging system, and
- Figure 4: illustrates the method according to a preferred embodiment of the invention.

### Detailed description of preferred embodiments of the invention

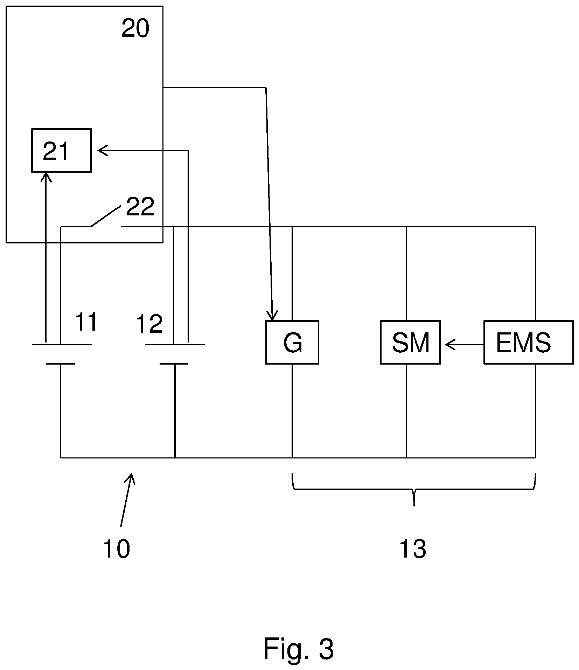

Figure 3 is a circuit diagram of a preferred embodiment of a charging system provided with a control unit 20 which comprises a battery monitor 21 and a breaker 22. It further depicts an electrical system 13 which comprises a starter motor SM, a generator G and an EMS (engine management system) unit and which controls the starter motor, as also described above in relation to Figure 1. The purpose of the charging system is to control the charging process of the vehicle's batteries which comprise a starting battery set 11 with first parameters which characterise this first battery set, and a service battery set 12 with second parameters which characterise this second battery set. The battery monitor 21 is intended to determine the first and second parameters, and the control unit 20 is intended to regulate charging voltage with respect to the first and second parameters. The breaker 22 regulates in such a way that either or both of the battery sets may be connected, and the control unit 20 is also intended to demand generator voltage from the generator (G) and regulate charging voltage with respect to the first and second parameters, but is also intended to control the breaker 22.

In another embodiment the battery monitor 21 may be situated outside the control unit 20, e.g. adjacent to the starting battery set 11 and the service battery set 12. Likewise, the breaker 22 may in another embodiment be situated outside the control unit 20.

Controlling the charging process involves regulating the magnitude of applied voltage and the amount of time for which it is applied. The first parameters comprise the starting battery set's battery type, SOC, SOH and temperature, and the second parameters comprise the service battery set's battery type, SOC, SOH and temperature. A battery's state of health means its ability to be discharged and recharged, compared with its original ability. Its state of health is impaired by the lead plates corroding or sulphatising, by the active material on them becoming detached, by the electrolyte level dropping too low and/or by vibration damage.

As the starting battery set must be able to deliver a high power to run the starter motor, whereas the service battery set needs good cyclic characteristics (as mentioned in the introduction), it is therefore appropriate to use different battery types, i.e. in terms of their chemical composition, the form (fixed or floating) of their constituent parts, etc. Where batteries are of different types, they will also have different charging voltage requirements, so it is desired to cater for the charging voltage which a particular battery type needs. SOC and SOH develop differently between the starting battery set and the service battery set. Their temperatures may also vary differently.

The breaker 22 may be in an open state, as in Figure 3, in which the starting battery set 11 is disconnected. It may alternatively be in a closed state, in which case the whole circuit is closed and the starting battery set is also connected.

The vehicle's battery system may for example be so configured that the starting battery set comprises a single starting battery connected in parallel with the service battery set which likewise comprises a single service battery. Figure 3 shows a starting battery 11 connected in parallel with a service battery 12. In an alternative embodiment each of the vehicle's battery sets may comprise two or more batteries connected in series. The starting battery set may for example comprise two starting batteries connected in series which are connected in parallel with the service battery set which comprises two service battery sets connected in series.

The charging system's control unit 20 therefore puts the breaker into an open or closed state. The control unit is intended to use the breaker to put the charging system into different charging situations. In a first charging situation both the starting battery set and the service battery set are connected by the breaker being put into a closed state in which charging the starting battery set is intended to be of higher priority than charging the service battery set, so the charging process is intended primarily to cater for the first parameters for the starting battery set.

In a second charging situation, putting the breaker 22 into a closed state connects both the starting battery set and the service battery set, and charging the service battery set is intended to be of higher priority than charging the starting battery set, so the charging process in this second situation is intended primarily to cater for the second parameters for the service battery set.

In a third charging situation, putting the breaker 22 into an open state does not connect the starting battery set but only the service battery set, so the charging process in this third situation is only intended to cater for the second parameters.

In a fourth charging situation, putting the breaker 22 into a closed state connects both the starting battery set and the service battery set, and the charging of both of the battery sets is intended to be of equal priority.

The starting battery set 11 is thus connected or disconnected by means of the breaker 22 when a certain voltage is applied so that it is possible to control the amount of time for which it is charged. If the starting battery set is deemed sufficiently charged by a certain time, continued charging may be deferred to a later occasion, so this battery set may be disconnected, which corresponds to the third charging situation described above.

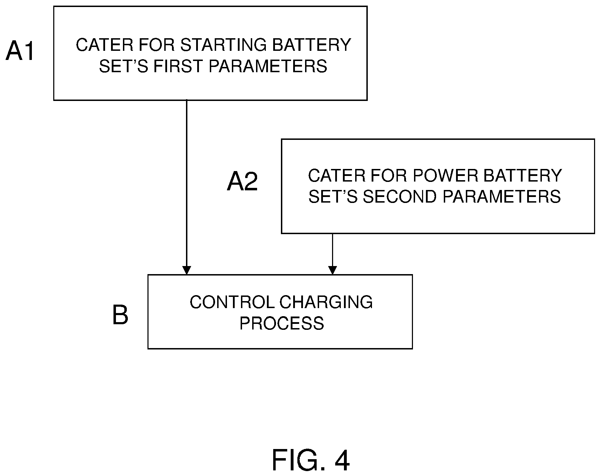

The invention relates also to a method for controlling the charging process of a vehicle's batteries which comprise a starting battery set 11 with first parameters which characterise this first battery set, and a service battery set 12 with second parameters which characterise this second battery set. The method comprises catering for the first and second parameters of the battery sets and controlling the charging process on the basis of these parameters. The method is illustrated in Figure 4 in which a step A1 caters for the starting battery set's first parameters and a step A2 for the service battery set's second parameters. These two steps may be simultaneous or consecutive, the only essential is that they take place before the step (B) of controlling the charging process.

The four main charging situations for the method for controlling the charging process of the starting battery set and the service battery set described above are here repeated in relation to the description of the method according to the invention.

In a first charging situation, both the starting battery set and the service battery set are connected and charging the starting battery set is of higher priority than charging the service battery set, so the charging process caters primarily for the first parameters.

In a second charging situation, both the starting battery set and the service battery set are connected and charging the service battery set is of higher priority than charging the starting battery set, so the charging process caters primarily for the second parameters.

In a third charging situation, the starting battery set is not connected, but only the service battery set, so the charging process caters only for the second parameters.

In a fourth charging situation, both the starting battery set and the service battery set are connected and the charging of both sets is of equal priority, so the charging process caters for both the first and second parameters.

The present invention is not confined to the preferred embodiments described above. Sundry alternatives, modifications and equivalents may be used. The aforesaid embodiments are therefore not to be regarded as limiting the invention's protective scope, which is defined by the attached claims.

## Claims

1. A method for controlling the charging process of a vehicle's batteries by means of a charging system, which batteries comprise a starting battery set (11) with first parameters which characterise this first battery set and a service battery set (12) with second parameters which characterise this second battery set,
wherein the method comprises
- catering (A1, A2) for the first and second parameters of the battery sets, in which the first parameters comprise the starting battery set's battery type, state of charge, state of health and temperature, and the second parameters comprise the service battery set's battery type, state of charge, state of health and temperature and where said service battery set (12) is always connected to an electrical system (13) including a generator (G), and
- controlling (B) the charging process on the basis of these parameters in which the method for controlling the charging process comprises regulating the magnitude of charging voltage applied from the electrical system (13) to the battery sets (11, 12) and the amount of time for which it is applied in order to put the charging system into different charging situations:
- a first charging situation in which both the starting battery set and the service battery set are connected to the electrical system by a breaker (22) being put into a closed state and charging the starting battery set is of higher priority than charging the service battery set;
- a second charging situation in which both the starting battery set and the service battery set are connected to the electrical system by the breaker being put into the closed state and charging the service battery set is of higher priority than charging the starting battery set;
- a third charging situation in which the breaker is put into an opened state so that the starting battery set is disconnected from the electrical system and the service battery set is connected to the electrical system; and
- a fourth charging situation in which both the starting battery set and the service battery set are connected to the electrical system by the breaker being put into the closed state and the charging of both sets is of equal priority.

2. A charging system for controlling the charging process of a vehicle's batteries which comprise a starting battery set (11) with first parameters which characterise this first battery set, and a service battery set (12) with second parameters which characterise the second battery set, which system comprises a control unit (20), wherein the control unit comprises
- a battery monitor (21) configured to determine the first and second parameters in which the first parameters comprise the starting battery set's battery type, state of charge, state of health and temperature, and the second parameters comprise the service battery set's battery type, state of charge, state of health and temperature and where said service battery set (12) is always connected to an electrical system (13) including a generator (G), and
- a breaker (22) configured to connect or disconnect said starting battery set (11) to or from the electrical system and
where the control unit (20) is further configured to regulate the magnitude of charging voltage applied from the electrical system (13) to the battery sets (11, 12) and the amount of time for which it is applied in order to put the charging system into different charging situations:
- a first charging situation in which both the starting battery set and the service battery set are connected to the electrical system by the breaker being put into a closed state, wherein charging the starting battery set is of higher priority than charging the service battery set;
- a second charging situation in which both the starting battery set and the service battery set are connected to the electrical system by the breaker being put into the closed state, wherein charging the service battery set is of higher priority than charging the starting battery set;
- a third charging situation in which the breaker is put into an opened state so that the starting battery set is disconnected from the electrical system and the service battery set is connected to the electrical system; and
- a fourth charging situation in which both the starting battery set and the service battery set are connected to the electrical system by the breaker being put into the closed state, wherein the charging of the two battery sets of equal priority.

3. A charging system according to claim 2, in which the starting battery set (11) comprises at least one starting battery connected in parallel with the service battery set (12) which comprises at least one service battery.

4. A charging system according to claim 2 or 3, in which the starting battery set (11) comprises two starting batteries mutually connected in series which are connected in parallel with the service battery set (12) which comprises two service batteries connected in series.

## Patentansprüche

1. Verfahren zur Steuerung des Ladevorgangs von Batterien eines Fahrzeugs mittels eines Ladesystems, wobei die Batterien einen Starterbatteriesatz (11) mit ersten Parametern, die diesen ersten Batteriesatz charakterisieren, und einen Betriebsbatteriesatz (12) mit zweiten Parametern umfassen, die diesen zweiten Batteriesatz charakterisieren,
wobei das Verfahren umfasst
- Kümmern (A1, A2) um die ersten und zweiten Parameter der Batteriesätze, wobei die ersten Parameter den Batterietyp, den Ladezustand, den Gesundheitszustand und die Temperatur des Starterbatteriesatzes umfassen, und die zweiten Parameter den Batterietyp, den Ladezustand, den Gesundheitszustand und die Temperatur des Betriebsbatteriesatzes umfassen, und wobei der Betriebsbatteriesatz (12) ständig mit einem elektrischen System (13) verbunden ist, das einen Generator (G) aufweist, und
- Steuern (B) des Ladevorgangs auf der Basis dieser Parameter, wobei das Verfahren zur Steuerung des Ladevorgangs umfasst ein Regeln der Höhe der Ladespannung, die aus dem elektrischen System (13) auf die Batteriesätze (11, 12) aufgebracht wird, und der Zeitdauer, für die sie aufgebracht wird, um das Ladesystem in verschiedene Ladezustände zu versetzen:
- einen ersten Ladezustand, in dem sowohl der Starterbatteriesatz als auch der Betriebsbatteriesatz durch einen in einen geschlossenen Zustand gebrachten Unterbrecher (22) mit dem elektrischen System verbunden sind und ein Laden des Starterbatteriesatzes eine höhere Priorität hat als ein Laden des Betriebsbatteriesatzes,
- einen zweiten Ladezustand, in dem sowohl der Starterbatteriesatz als auch der Betriebsbatteriesatz durch den in den geschlossenen Zustand gebrachten Unterbrecher mit dem elektrischen System verbunden sind und ein Laden des Betriebsbatteriesatzes eine höhere Priorität hat als ein Laden des Starterbatteriesatzes,
- einen dritten Ladezustand, in dem der Unterbrecher in einen geöffneten Zustand versetzt wird, sodass der Starterbatteriesatz von dem elektrischen System getrennt ist und der Betriebsbatteriesatz mit dem elektrischen System verbunden ist, und
- einen vierten Ladezustand, in dem sowohl der Starterbatteriesatz als auch der Betriebsbatteriesatz durch den in den geschlossenen Zustand gebrachten Unterbrecher mit dem elektrischen System verbunden sind und das Laden beider Sätze gleiche Priorität hat.

2. Ladesystem zum Steuern des Ladevorgangs von Batterien eines Fahrzeugs, die einen Starterbatteriesatz (11) mit ersten Parametern, welche diesen ersten Batteriesatz charakterisieren, und einen Betriebsbatteriesatz (12) mit zweiten Parametern umfassen, die den zweiten Batteriesatz charakterisieren, wobei das System eine Steuereinheit (20) enthält, wobei die Steuereinheit aufweist
- eine Batterieüberwachungsvorrichtung (21), die dazu eingerichtet ist, die ersten und zweiten Parameter zu ermitteln, wobei die ersten Parameter den Batterietyp, den Ladezustand, den Gesundheitszustand und die Temperatur des Starterbatteriesatzes umfassen und die zweiten Parameter den Batterietyp, den Ladezustand, den Gesundheitszustand und die Temperatur des Betriebsbatteriesatzes umfassen, und wobei der Betriebsbatteriesatz (12) ständig mit einem elektrischen System (13) verbunden ist, das einen Generator (G) aufweist, und
- einen Unterbrecher (22), der dazu eingerichtet ist, den Starterbatteriesatz (11) mit dem elektrischen System zu verbinden oder ihn davon zu trennen, und
wobei die Steuereinheit (20) ferner dazu eingerichtet ist, die Höhe der Ladespannung, die aus dem elektrischen System (13) auf die Batteriesätze (11, 12) aufgebracht wird, und die Zeitdauer, für die sie aufgebracht wird, zu regeln, um das Ladesystem in verschiedene Ladezustände zu versetzen:
- einen ersten Ladezustand, in dem sowohl der Starterbatteriesatz als auch der Betriebsbatteriesatz durch den in einen geschlossenen Zustand gebrachten Unterbrecher mit dem elektrischen System verbunden sind, wobei ein Laden des Starterbatteriesatzes eine höhere Priorität hat als ein Laden des Betriebsbatteriesatzes,
- einen zweiten Ladezustand, in dem sowohl der Starterbatteriesatz als auch der Betriebsbatteriesatz durch den in den geschlossenen Zustand gebrachten Unterbrecher mit dem elektrischen System verbunden sind, wobei ein Laden des Betriebsbatteriesatzes eine höhere Priorität hat als ein Laden des Starterbatteriesatzes,
- einen dritten Ladezustand, in dem der Unterbrecher in einen geöffneten Zustand versetzt wird, sodass der Starterbatteriesatz von dem elektrischen System getrennt ist und der Betriebsbatteriesatz mit dem elektrischen System verbunden ist, und
- einen vierten Ladezustand, in dem sowohl der Starterbatteriesatz als auch der Betriebsbatteriesatz durch den in den geschlossenen Zustand gebrachten Unterbrecher mit dem elektrischen System verbunden sind, wobei das Laden der zwei Batteriesätze gleiche Priorität hat.

3. Ladesystem nach Anspruch 2, bei dem der Starterbatteriesatz (11) zumindest eine Starterbatterie umfasst, die parallel zum Betriebsbatteriesatz (12) geschaltet ist, der zumindest eine Betriebsbatterie umfasst.

4. Ladesystem nach Anspruch 2 oder 3, bei dem der Starterbatteriesatz (11) zwei miteinander in Reihe geschaltete Starterbatterien umfasst, die parallel zum Betriebsbatteriesatz (12) geschaltet sind, der zwei in Reihe geschaltete Betriebsbatterien umfasst.

## Revendications

1. Procédé pour le contrôle du processus de charge des batteries d'un véhicule au moyen d'un système de charge, lesquelles batteries comprennent un ensemble de batterie de démarrage (11) avec des premiers paramètres qui caractérisent ce premier ensemble de batterie et un ensemble de batterie de service (12) avec des deuxièmes paramètres qui caractérisent ce deuxième ensemble de batterie,
dans lequel le procédé comprend
- la prise en charge (A1, A2) des premiers et deuxièmes paramètres des ensembles de batteries, dans lesquels les premiers paramètres comprennent le type de batterie de l'ensemble de batterie de démarrage, l'état de charge, l'état de santé et de température, et les deuxième paramètres comprennent le type de batterie de l'ensemble de batterie de service, l'état de charge, l'état de santé et de température, et l'endroit où ledit ensemble de batterie de service (12) est toujours connecté à un système électrique (12) comprenant un générateur (G), et
- le contrôle (B) du processus de charge sur la base de ces paramètres dans lesquels le procédé pour le contrôle du processus de charge comprend la régulation de l'amplitude de la tension de charge appliquée à partir du système électrique (13) aux ensembles de batterie (11, 12) et la quantité de temps pendant laquelle elle est appliquée afin de mettre le système de charge dans des situations de charge différentes :
- une première situation de charge dans laquelle l'ensemble de batterie de démarrage et l'ensemble de batterie de service sont connectés au système électrique par un disjoncteur (22) étant placé dans un état fermé et la charge de l'ensemble de batterie de démarrage est d'une priorité plus élevée que la charge de l'ensemble de batterie de service ;
- une deuxième situation de charge dans laquelle l'ensemble de batterie de démarrage et l'ensemble de batterie de service sont connectés au système électrique par le disjoncteur étant placé dans l'état fermé et la charge de l'ensemble de batterie de service est de priorité plus élevée que la charge de l'ensemble de batterie de démarrage ;
- une troisième situation de charge dans laquelle le disjoncteur est placé dans un état ouvert de sorte que l'ensemble de batterie de démarrage soit déconnecté du système électrique et que l'ensemble de batterie de service soit connecté au système électrique ; et
- une quatrième situation de charge dans laquelle l'ensemble de batterie de démarrage et l'ensemble de batterie de service sont connectés au système électrique par le disjoncteur étant placé dans l'état fermé et la charge des deux ensembles est de priorité égale.

2. Système de charge pour le contrôle du processus de charge des batteries d'un véhicule qui comprend un ensemble de batterie de démarrage (11) avec des premiers paramètres qui caractérisent ce premier ensemble de batterie, et un ensemble de batterie de service (12) avec des deuxièmes paramètres qui caractérisent le deuxième ensemble de batterie, le système comprend une unité de commande (20), dans laquelle l'unité de commande comprend
- un moniteur de batterie (21) configuré pour déterminer les premiers et deuxièmes paramètres dans lesquels les premiers paramètres comprennent le type de batterie de l'ensemble de batterie de démarrage, l'état de charge, l'état de santé et de température, et les deuxièmes paramètres, le type de batterie de l'ensemble de batterie de service, l'état de charge, l'état de santé et de température et l'endroit où ledit ensemble de batterie de service (12) est toujours connecté à un système électrique (13) comprenant un générateur (G), et
- un disjoncteur (22) configuré pour connecter ou déconnecter ledit ensemble de batterie de démarrage (11) au ou depuis le système électrique et
où l'unité de commande (20) est en outre configurée pour réguler l'amplitude de la tension de charge appliquée à partir du système électrique (13) aux ensembles de batteries (11, 12) et la quantité de temps pendant laquelle elle est appliquée afin de mettre le système de charge dans des situations de charge différentes :
- une première situation de charge dans laquelle l'ensemble de batterie de démarrage et l'ensemble de batterie de service sont connectés au système électrique par le disjoncteur étant placé dans un état fermé, dans laquelle la charge de l'ensemble de batterie de démarrage est d'une priorité plus élevée que la charge de l'ensemble de batterie de service ;
- une deuxième situation de charge dans laquelle l'ensemble de batterie de démarrage et l'ensemble de batterie de service sont connectés au système électrique par le disjoncteur étant placé dans l'état fermé, dans laquelle la charge de la batterie de service est d'une priorité plus élevée que la charge de l'ensemble de batterie de démarrage ;
- une troisième situation de charge dans laquelle le disjoncteur est placé dans un état ouvert de sorte que l'ensemble de batterie de démarrage soit déconnecté du système électrique et que l'ensemble de batterie de service soit connecté au système électrique ; et
- une quatrième situation de charge dans laquelle l'ensemble de batterie de démarrage et l'ensemble de batterie de service sont connectés au système électrique par le disjoncteur étant placé dans l'état fermé, dans laquelle la charge des deux ensembles de batterie est de priorité égale.

3. Système de charge selon la revendication 2, dans lequel l'ensemble de batterie de démarrage (11) comprend au moins une batterie de démarrage connectée en parallèle avec l'ensemble de batterie de service (12) qui comprend au moins une batterie de service.

4. Système de charge selon la revendication 2 ou 3, dans lequel l'ensemble de batterie de démarrage (11) comprend deux batteries de démarrage connectées mutuellement en série qui sont connectées en parallèle avec l'ensemble de batterie de service (12) qui comprend deux batteries de service connectés en série.
